# EUROPEAN PATENT SPECIFICATION

(11) **EP 1 656 283 B1**
(45) Date of publication and mention of the grant of the patent: **27.06.2012**
(21) Application number: 04764267.3
(22) Date of filing: 18.08.2004
(51) Int. Cl.: B60R 21/01, B60R 21/16

(54) **A SIDE AIR-BAG SYSTEM**
SEITENAIRBAGSYSTEM
SYSTÈME D'AIRBAG LATERAL

(30) Priority: 19.08.2003 GB 0319496
(43) Date of publication of application: 17.05.2006
(73) Proprietor: AUTOLIV DEVELOPMENT AB, 447 38 Vargarda (SE)
(72) Inventor: SZILAGYI, Jörg, 85221 Dachau (DE); GARRET, Gilles, F-76000 Rouen (FR); ASTRÖM, Anders, S-441 63 Alingsås (SE); HOLGERS, Alf, S-441 40 Alingsas (SE); PRETOT, Stephane, S-443 32 Lerum (SE); DERSHEM, Scott, West Bloomfield, MI 48323 (US); GANS, Russ, Farmington Hills, MI 48335 (US)
(74) Representative: Koch, Henning
(86) International application number: PCT/EP2004/009282
(87) International publication number: WO 2005/016703

(56) References cited:
- DE-A- 4 433 046
- DE-A- 19 957 187
- GB-A- 2 289 786
- GB-A- 2 306 409
- US-A- 5 626 359
- US-A1- 2001 029 416
- US-A1- 2001 035 634
- US-A1- 2002 112 911
- US-A1- 2003 051 530
- US-A1- 2003 075 223
- US-B1- 6 237 949
- US-B1- 6 341 252

## Description

**THE PRESENT INVENTION** relates to a side air-bag system.

It has been proposed to provide air-bags in motor vehicles, adapted to be inflated in the event that an accident should occur to provide protection for an occupant of the vehicle. It is becoming increasingly common for vehicles to be provided not only with a front air-bag, intended primarily to provide protection for a vehicle occupant in the event of a frontal impact, but also with side air-bags, which are primarily intended to provide protection in the event that a side impact should occur. A side air-bag may be mounted in the back-rest of a vehicle seat or in part of the vehicle adjacent the vehicle seat, and are so configured that, when inflated, they are located between a seat occupant and an adjacent side part of the vehicle.

Side air-bags in current use are adapted to become inflated to a specific predetermined pressure, that pressure being determined by the gas generating capability of the inflator and the dimensions of any vents provided in the air-bag. A typical side air-bag is designed for use with an average seat occupant and also for an average crash scenario.

From US 6,341,252 a side air-bag system according to the preamble of claim 1 is known, in particular it is known to control an occupant protection system with an inflatable air-bag based on sensor signals relating to vehicle occupant conditions like weight and position. A controller receives signals from crash sensors in order to evaluate the severity of a vehicle impact and to control the output of a multi-stage inflator into such occupant protection system like an air-bag.

GB 2 289 786 discloses a side impact air-bag system with a pre-crash sensor. Objects approaching the vehicle are sensed and a side impact air-bag is controlled based on such pre-crash signal to be inflated according to the anticipated situation. The side impact air-bag can be inflated in two stages by an inflator, wherein a first stage is inflated prior to the collision and a second stage is inflated upon detection of the collision by a crash sensor.

An occupant recognition system to identify a person is known from US 2001/029416.

US 2001/035634 discloses an arrangement of several air-bags in a vehicle, wherein the air-bags may be made of film material. A vent opening could be arranged in the air-bag which is initially closed and covered by a flap and which is prepared to open up and to release the vent opening, when a predetermined gas pressure inside the air-bag is reached.

From US 5,626,359 it is known to provide a regulating valve at an air-bag housing of a frontal air-bag unit which is controlling the air-bag inflation. A controller regulates the valve based on input signals from at least two sensors like crash sensor, radar sensor, occupant condition sensor.

GB 2 306 409 discloses an air-bag system with a valve arrangement which is controlled by a controller with input signal related to the crash and occupant status. The valve contains several elements which will be slidably or rotationally opened, when a pyrotechnical element is triggered by the controller.

Further documents disclosing related art are US 2003/075223, US 6,237,949, US2002/112911, DE 199 57 187, DE 44 33 046 and US 2003/051530.

It has now been found that a side air-bag which has an internal pressure suitable for an average person in an average crash scenario may provide a very reduced degree of protection for a non-average person, especially if the non-average person is involved in a non-average crash scenario.

The present invention seeks to provide an improved side air-bag.

The invention is defined by a side air-bag system according to claim 1. Preferable embodiments are given in the dependent claims.

In order that the invention may be more readily understood and so that further features thereof may be appreciated, the invention will now be described, by way of example, with reference to the accompanying drawings in which:
FIGURE 1 is a diagrammatic view of a vehicle seat provided with a side air-bag in accordance with the invention,
FIGURE 2 is a graphical figure provided for purposes of explanation,
FIGURE 3 is a further graphical figure provided for purposes of explanation,
FIGURE 4 is a diagrammatic sectional view of a gas generator,
FIGURE 5 is a diagrammatic view of a controllable vent, not according to the invention, with alternate positions of one component being shown in phantom,
FIGURE 6 is a diagrammatic view of a further form of controllable vent, not according to the invention with alternate positions of one component being shown in phantom,
FIGURE 7 is a diagrammatic side view of a side air-bag according to the invention,
FIGURE 8 is an enlarged view of part of the air-bag of Figure 7 before deployment of a squib,
FIGURE 9 is a view corresponding to Figure 8 illustrating the situation after deployment of the squib,
FIGURE 10 is a diagrammatic side view of a side air-bag according to the invention,
FIGURE 11 is a perspective view of part of the air-bag of Figure 10,
FIGURE 12 is a view corresponding to Figure 10 showing the side air-bag after actuation of a squib, and
FIGURE 13 is a view corresponding to Figure 11 showing the situation after actuation of the squib.

The present inventors have determined that the overall effectiveness of a side air-bag may be enhanced if the deployment characteristic of the side bag is matched to the weight and position of a seat occupant in the seat, and also to the nature of the side impact.

Thus the present inventors have developed a side air-bag arrangement in which the deployment characteristic of the air-bag is controlled in dependence upon the severity of the crash and in dependence upon one or more parameters relating to the seat occupant.

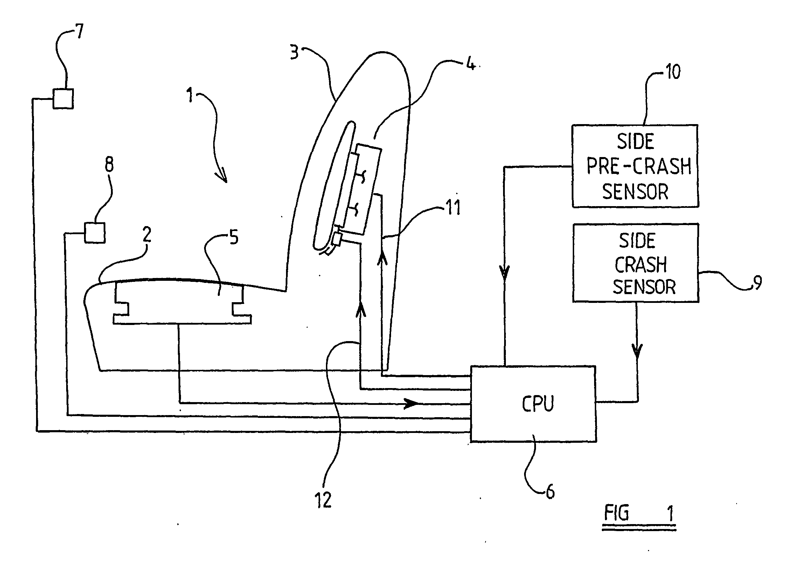

Referring initially to Figure 1, a vehicle seat 1 is illustrated, the seat having a squab 2 and a back-rest 3.

Mounted within the back-rest 3 is a side air-bag unit 4. As will become clear from the following description the side air-bag unit has a controllable gas generator capable of generating a controlled amount of gas, the amount of gas generated by the gas generator being determined by a control signal. Also the air-bag has a controlled venting arrangement, the controlled venting arrangement being such that the cross-sectional area of the vent or vents may be adjusted in response to a control signal. The features of the air-bag unit 4 will be described below in greater detail.

Mounted within the squab 2 of the seat is a seat occupant sensor unit 5. The sensor unit 5 preferably incorporates at least one weight sensor adapted to determine the weight of a seat occupant. Preferably the sensor is such that the sensor can initially determine whether the seat is or is not occupied. Secondly the sensor should be such that the sensor can determine the weight of the seat occupant, and thirdly the sensor should preferably be such that the sensor can determine the position of the seat occupant, that is to say, for example, whether the seat occupant is perched right on the very front edge of the squab of the seat, or whether the seat occupant is sitting fully up against the back-rest 3. The sensor may also sense whether the seat occupant has their centre of gravity towards the left of the seat, or towards the right of the seat.

The seat occupant sensor unit 5 is connected to provide a signal to a central processor unit 6.

An optical, radar or ultrasonic seat occupant sensor 7 may be provided to determine the position or size of the seat occupant. The sensor 7 may simply comprise a television camera, the signal from the television camera being processed to determine the position of the seat occupant and size of the seat occupant. Alternatively the sensor 7 may have an arrangement including multiple beams which intersect the space above the squab 2 of the seat, so that the arrangement may relatively precisely map the position of the occupant.

A seat occupant identity reader 8 is also provided connected to provide a signal to the central processor unit. Many vehicles now incorporate an identity reader, configured to read a key or card or chip which is carried by a driver of the vehicle, the vehicle responding to the reading of such a key, card or chip to locate various adjustable components of the vehicle in desired positions. Thus the seats or mirrors maybe adjusted automatically depending upon who is to drive the vehicle. It is envisaged that such an identity reader 8 may be utilised to provide a signal to a central processor unit, the central processor unit incorporating information concerning the weight and or height and or sex and or age of the person identified by the key, card or chip.

It is, therefore, to be appreciated, that the sensor 5 within the seat, the optical ultrasonic or radar sensor 7 and the identity reader 8 all provide signals to the central processor unit which are indicative of one or more parameters of the seat occupant, those parameters including the weight and position of the seat occupant on the seat.

The central processor unit 6 also receives signals, in the described embodiment, from a crash sensor.

A side crash sensor 9, is mounted in a side part of the motor vehicle. The side crash sensor 9 may determine the intrusion speed of the object effecting the side impact with the vehicle, or may determine the degree or location of deformation of the vehicle. If deformation of an extremely strong element of the vehicle, such as part of the chassis, then the crash is a severe crash, whereas if only external body panels are deformed, the crash may be a relatively weak crash. The side crash sensor may determine the severity of the crash by measuring the pressure rise within the cabin of the vehicle, or the pressure rise within the side structure or side door of the vehicle or may determine the severity of the crash by determining the amplitude of sound waves generated as a consequence of the crash. Many types of side crash sensor 9 may be used, and the side crash sensor provides a signal to the central processor unit 6.

A side pre-crash sensor 10 may also be provided adapted to generate a signal when a side crash is predicted. The side crash pre-sensor may be optical, ultrasonic or radar, and may repeatedly determine the distance between the vehicle and an approaching object, thus calculating the relative speed between the vehicle and the approaching object. The side pre-crash sensor 10 may also, using a television camera or the like, determine, at least to an approximation, the size and therefore the weight of an approaching object or vehicle. Thus the side pre-crash sensor generates a signal indicative of the anticipated severity of a side impact, and that signal is supplied to the central processor unit 6.

It is thus to be appreciated that the combination of the side crash sensor 9 and the side pre-crash sensor 10 provide signals to the central processor unit indicative of the severity or anticipated severity of a side impact.

The central processor unit generates two control signals, a first control signal, on line 11, being effective to control the adjustable gas generator that is to inflate the side air-bag, and the second control signal, on line 12 being effective to control the adjustable vents provided within the side air-bag.

Referring now to Figure 1 it should be explained that the inventors have determined that it is desirable for the pressure of gas within the air-bag, at least during the initial inflation stages of the air-bag, to increase with increasing crash severity and to increase with increasing occupant weight. Thus, in a very severe side crash, or with a heavy seat occupant, it is important that a very high pressure of gas should be provided, not only to ensure that the side air-bag is inflated as swiftly as possible, but also to ensure that the side air-bag provides a maximum protective effect, and is able to resist "strike through" of the occupant. Similarly, with a crash of low severity or a light occupant, the air-bag should be inflated to a lower pressure than with a heavy occupant, to minimise the risk of the occupant bouncing off the bag.

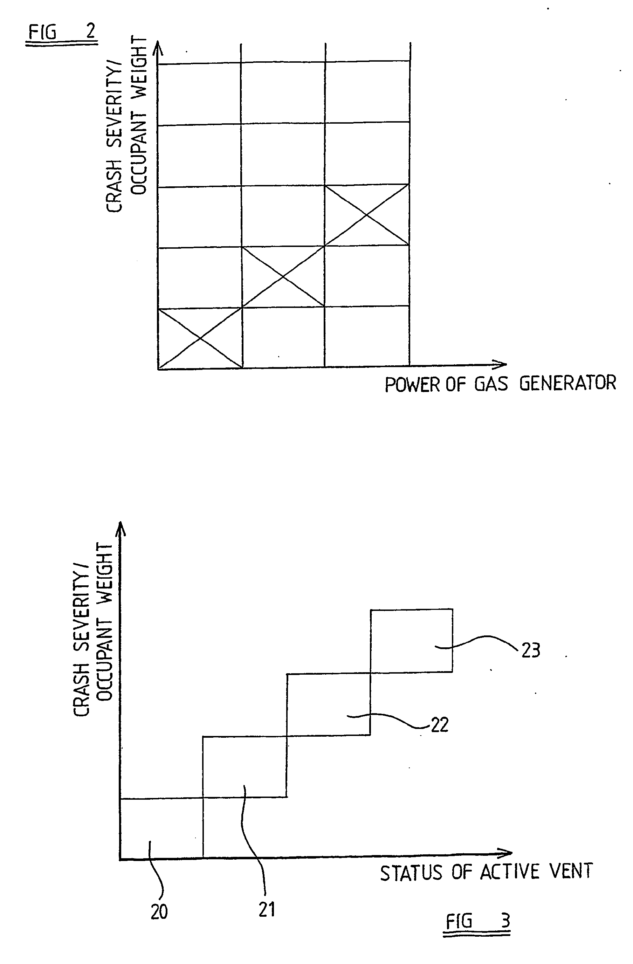

Figure 2 is a graphical representation showing crash severity/occupant weight plotted against the power of the gas generator. It can be seen that as crash severity/occupant weight increases, so it is desired that the power of the gas generator should increase. Figure 2 illustrates the situation for a gas generator provided with two pyrotechnic charges of different sizes, so that activation of a first pyrotechnic charge will provide a low quantity of gas, activation of the second pyrotechnic charge will provide a higher quantity of gas and activation of both pyrotechnic charges will provide a yet higher quantity of gas.

In addition to it being desirable to control the quantity of gas generated by the gas generator, it is also desirable to be able to control the vent or vents provided in the side air-bag. Figure 3 shows graphically the status of an active vent as compared with crash severity/occupant weight. In an initial region 20, with low crash severity/occupant weight, a vent should be completely open before commencement of deployment of the air-bag. For a higher crash severity occupant weight, as shown in region 21 the vent may be opened a predetermined time after the commencement of deployment of the air-bag, typically with the vent being opened 20 to 30 milliseconds after the initial triggering signal which commences deployment of the air-bag.

Region 22 illustrates a situation where the vent is only partly opened after a predetermined period of time following commencement of deployment of the air-bag, and region 23 shows the situation where the vent is maintained completely closed.

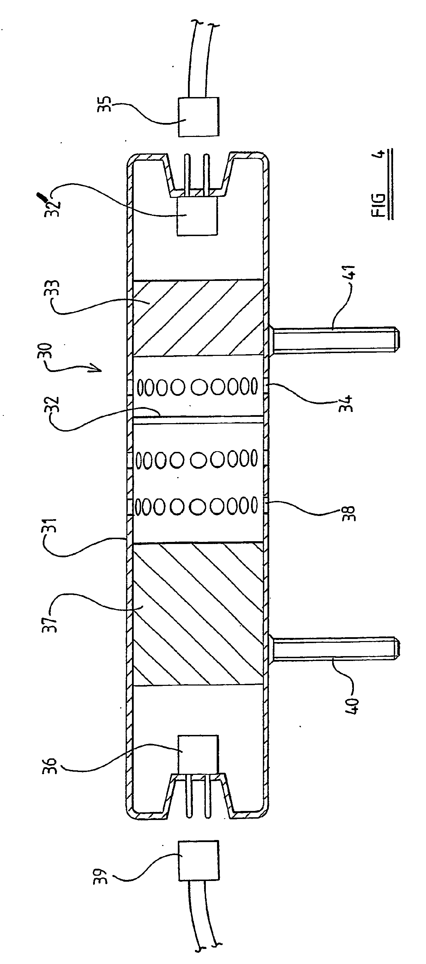

Figure 4 illustrates a controllable gas generator to be used in the side air-bag 4 of Figure 1. The controllable gas generator is a gas generator which can generate either a first relatively small quantity of gas or a second larger quantity of gas or a third even larger quantity of gas. The gas generator is thus a multi-stage gas generator, but other forms of controllable gas generator may be utilised. As shown in Figure 4 a gas generator 30 comprises a cylindrical housing 31 divided into two internal chambers by means of a transverse partition 32. One chamber is provided with an actuating squib 32' and a relatively small pyrotechnic charge 33. The chamber is provided with a plurality of gas outlet apertures 34. A connector 35 may be connected to the pins of the squib 32' which project beyond the housing 31 to provide an electrical signal to the squib.

The other chamber is provided with a squib 36 and a relatively large pyrotechnic charge 37. The chamber is provided with gas outlet apertures 38. A connector 39 is provided connected to the pins of the squib 36 which project beyond the housing 31.

The housing 31 is provided with two radially extending fixing studs 40, 41.

It is to be appreciated that if a signal is supplied through the connector 35 to the squib 32', the first relatively small pyrotechnic charge will be actuated and a relatively small quantity of gas will be ejected through the gas outlet apertures 34.

On the other hand if the squib 36 is actuated by a signal coming through the connector 39, the somewhat larger pyrotechnic charge 37 will be actuated generating a larger quantity of gas which will be ejected through the gas outlet apertures 38. If both of the squibs 32' and 36 are actuated by signals passing through the connectors 35 and 39, both of the pyrotechnic charges 33 and 37 will be actuated and then a very large quantity of gas will be ejected through the gas outlet apertures 34 and 38.

As the gas generator is mounted within the side air-bag it is to be appreciated that an appropriate control signal can easily control the quantity of gas generated by the gas generator which is supplied to the interior of the side air-bag.

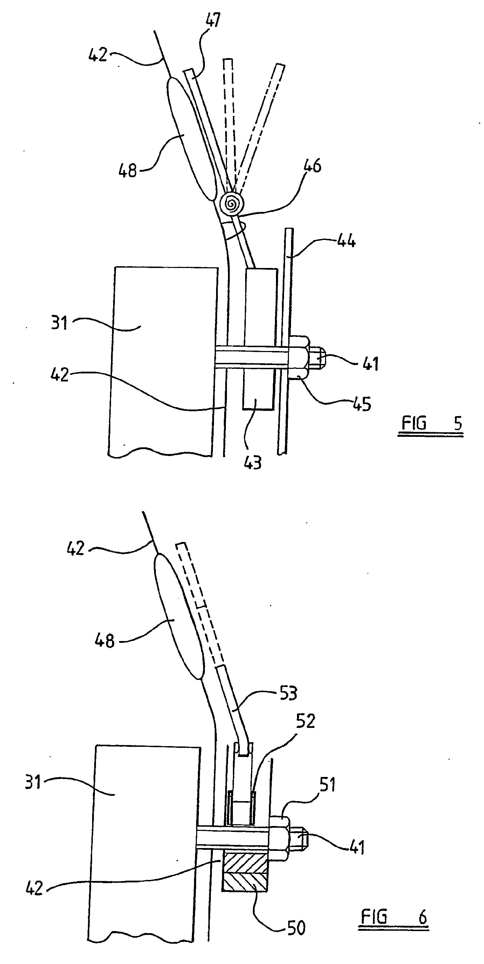

As has been mentioned the side air-bag is provided with one or more controllable vents. Various controllable vents that can be used will now be described. The controllable vents of Figures 5 and 6 are however not according to the invention.

Turning initially to Figure 5 part of a side air-bag is illustrated showing a controllable vent. Figure 5 illustrates the upper end of the housing 31 of the gas generator, illustrating the fixing stud 41. It can be seen that the fixing stud 41 passes through an aperture formed in the fabric 42 of the air-bag, before passing through a housing 43. The stud then passes through an aperture in a mounting plate 44 and is engaged by a nut 45. Thus the stud serves to mount the air-bag in position and also mounts the housing 43 in position.

Contained within the housing 43 is a reversible electric motor. Extending upwardly from the top of the housing 43 is a support finger 46, and pivotally mounted on the upper-most end of the support finger 46 is a masking element in the form of a moveable flap 47. The flap is driven by the electric motor. The movable flap 47 is shown having a first position located immediately adjacent a vent aperture 48 formed in the fabric 42 of the air-bag. It is to be appreciated that with the flap 47 in this position the vent 48 is substantially sealed. The flap 47 may be moved by the motor from the solid line position shown in Figure 5 successively to the phantom line positions, thus increasingly opening the vent 48. Thus, by controlling the position of the flap 47 it is possible to control the effective cross-sectional flow area of gas passing through the vent 48, thus controlling the overall degree of venting for the air-bag.

The motor may be a reversible motor so that the flap may, should this be desired, be returned to its initial position.

Figure 6 illustrates an alternative embodiment, not according to the invention, and again shows the upper-most part 31 of the gas generator housing, showing the fixing stud 41. The fixing stud 41 again passes through an aperture formed in the fabric 42 of the air-bag, and passes through a housing 50, the housing 50 being securely mounted in position. The free end of the stud is provided with a nut 51. The housing 50 contains a pyrotechnic charge 52 which, on deployment, serves to drive from the housing a masking element in the form of an extending element 53 of plate-like form. The extending element 53 has an initial position in which the element 53 does not in any way mask a venting aperture 48 provided in the fabric 42 of the air-bag. However, the extending element 53 may be driven to a first and also to a second extended position, as shown in phantom, in which the extending element 53 serves to partially mask or totally mask the vent aperture 48, again controlling the cross-sectional area of the vent.

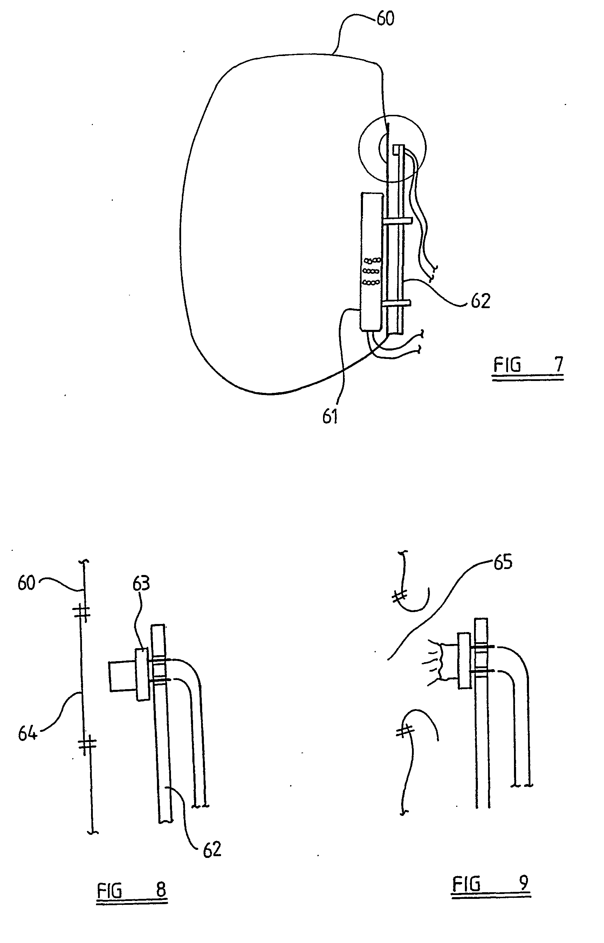

Figures 7, 8 and 9 illustrate an embodiment according to the invention. As shown in Figure 7, a side air-bag 60 is provided, the side air-bag having a gas generator 61 of the type discussed above. The gas generator is mounted to a support arm 62 which extends adjacent a rear part of the air-bag, the support arm 62 extending upwardly above the gas generator 61. Figure 8 shows an upper part of the support arm 62 showing that the upper part carries a squib 63 which is directed towards part of the air-bag 60 provided with an insert 64 which may be formed of relatively weak fabric, or which may be formed of a plastic foil.

It is thus to be appreciated that as the air-bag 60 inflates so the insert 64 is brought into alignment with the squib 63. If the squib 63 is then actuated the insert 64 becomes ruptured, as shown in Figure 9, thus creating a vent aperture 65.

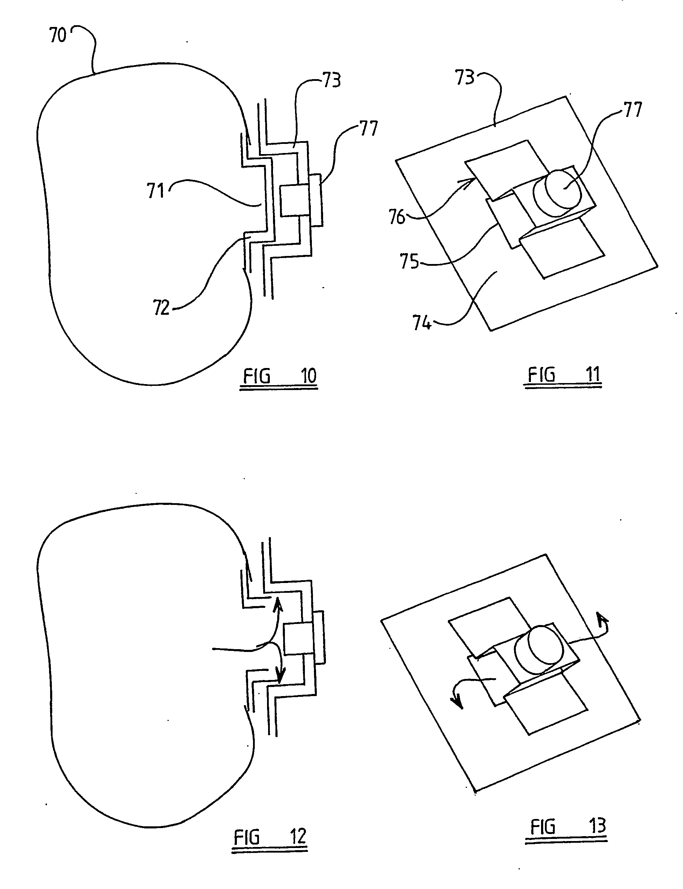

Figures 10 to 13 illustrate a further embodiment according to the invention which is similar to that of Figures 7 to 9. In this embodiment a side air-bag 70 is provided with an insert 71 constituting a weakened area. The insert 71 may extend over a fixed "lid" or support 72.

Mounted on the exterior of the air-bag is a squib holder 73. The squib holder 73 forms a plate 74 having a central aperture 75. Mounted on the plate is a bridging element 76 which bridges across the aperture 75, the bridging element carrying a squib 77. The squib 77 is thus located adjacent the insert 71 which has a weakened area.

On deployment of the squib, as shown in Figure 12, the weakened area is ruptured, thus enabling gas to pass through a now-opened vent into the space beneath the bridge formed by the bridging element 76. As shown in Figure 13 the gas may escape from either side of the bridge.

By controlling the gas generator and/or the vents with appropriate control signals the deployment characteristic of the air-bag may be controlled in dependence upon parameters relating to the severity of crash, and/or parameters relating to a seat occupant. It is to be understood that the multiple step gas generator and/or the vents may be used together or as alternatives depending on the precise characteristics of the vehicle.

Whilst, in the foregoing description, reference has been made to one type of adjustable gas generator and various types of vents, it is to be appreciated that alternative forms of adjustable gas generators and vents may be utilised, provided they fall within the scope of the appended claims.

Also, whilst a seat mounted side air-bag has been described, the side air-bag may be mounted on the vehicle, instead of being mounted on the seat.

## Claims

1. A side air-bag system comprising a side air-bag (4, 60 ,70) to be inflated in the event that a side impact should occur in a motor vehicle to provide protection for an occupant of the motor vehicle, the side air-bag (4, 60, 70) having a controllable deployment characteristic and a central processing unit (6) to control the side air-bag (4, 60, 70) by actuation of at least one squib (32',36), the central processing unit (6) being associated with a side crash sensor arrangement (9, 10) to provide one or more signals to the central processor unit (6) indicative of parameters of a side crash or anticipated side crash,
the central processing unit (6) being also associated with a seat occupant sensor arrangement (5, 7) or identifying arrangement (8) to provide one or more signals indicative of parameters relating to a seat occupant,
**characterized in that** the side crash sensor arrangement (9, 10) incorporates a crash sensor (9) and also a pre-crash sensor (10) and **in**
**that** a vent (65, 75) is provided in the side air-bag (4, 60, 70), the vent (65, 75) being constituted by part of the side air-bag (64, 71) which is rupturable in response to actuation of a further squib (63, 77) located adjacent the vent (65, 75).

2. A side air-bag system according to Claim 1 wherein the vent (65, 75) is formed by a rupturable insert (64, 71) provided in the side air-bag (60, 70), said further squib (63, 77) being mounted in position adjacent the rupturable insert (64, 71) to rupture the insert (64, 71) on deployment of the squib (63, 77).

3. A side air-bag system according to Claim 1 wherein the pre-crash sensor (10) is configured to determine the distance between, and the relative speed of, the sensor and an approaching item.

4. A side air-bag system according to Claim 1 wherein the pre-crash sensor (10) is configured to determine the size of an approaching item.

5. A side air-bag system according to Claim 1 wherein said seat occupant sensor arrangement (5, 7) incorporates a sensor (5) mounted in the squab of the seat responsive to the weight of a seat occupant.

6. A side air-bag system according to Claim 5 wherein the sensor (5) in the seat is configured to determine the position of the seat occupant.

7. A side air-bag system according to Claim 1 wherein the seat occupant sensor arrangement (5, 7) incorporates an optical ultrasonic or radar sensor (7) to determine parameters relating to the occupant of the seat.

8. A side air-bag system according to Claim 7 wherein the parameters determined comprise the weight and/or position of the seat occupant.

9. A side air-bag system according to Claim 1 wherein the seat occupant identifying arrangement (8) incorporates an identity reader to read a key, card or chip identifying a seat occupant.

10. A side air-bag system according to Claim 1 wherein a multi-stage gas generator (30, 61) is provided which has a plurality of discrete pyrotechnic charges (33, 37) of different sizes, each pyrotechnic charge (33, 37) being individually actuable.

11. A side air-bag system according to Claim 10 wherein there are two pyrotechnic charges (33, 37) of different sizes.

## Patentansprüche

1. Seitenairbagsystem, umfassend einen Seitenairbag (4, 60, 70), der im Fall, dass es in einem Kraftfahrzeug zu einem Seitenaufprall kommen sollte, aufgeblasen werden soll, um einen Insassen des Kraftfahrzeugs zu schützen, wobei der Seitenairbag (4, 60, 70) ein steuerbares Auslöseverhalten aufweist und eine zentrale Verarbeitungseinheit (6) zur Steuerung des Seitenairbags (4, 60, 70) durch Auslösen von mindestens einer Zündpille (32', 36), wobei die zentrale Verarbeitungseinheit (6) einer Seitenaufprallsensoranordnung (9, 10) zugehörig ist, die ein oder mehrere Signale an die zentrale Verarbeitungseinheit (6) liefert, das bzw. die Parameter eines Seitenaufpralls oder eines erwarteten Seitenaufpralls anzeigt bzw. anzeigen, wobei die zentrale Verarbeitungseinheit (6) auch einer Sitzbelegungssensoranordnung (5, 7) oder -erkennungsanordnung (8) zugehörig ist, die ein oder mehrere Signale liefert, das bzw. die Parameter anzeigt bzw. anzeigen, die eine Person auf dem Sitz betreffen, **dadurch gekennzeichnet, dass** die Seitenaufprallsensoranordnung (9, 10) einen Aufprallsensor (9) und auch einen Precrashsensor (10) enthält, und dadurch, dass eine Öffnung (65, 75) in dem Seitenairbag (4, 60, 70) vorgesehen ist, wobei die Öffnung (65, 75) von einem Teil des Seitenairbags (64, 71) gebildet wird, der als Reaktion auf die Betätigung einer weiteren Zündpille (63, 77), die angrenzend an die Öffnung (65, 75) angeordnet ist, zerreißbar ist.

2. Seitenairbagsystem nach Anspruch 1, wobei die Öffnung (65, 75) von einem zerreißbaren Einsatz (64, 71) gebildet wird, der in dem Seitenairbag (60, 70) vorgesehen ist, wobei die weitere Zündpille (63, 77) in einer Position angrenzend an den zerreißbaren Einsatz (64, 71) angebracht ist, um den Einsatz (64, 71) beim Zünden der Zündpille (63, 77) zu zerreißen.

3. Seitenairbagsystem nach Anspruch 1, wobei der Precrashsensor (10) eingerichtet ist, den Abstand zwischen dem Sensor und einem sich nähernden Objekt und die Relativgeschwindigkeit des Sensors und eines sich nähernden Objekts zu bestimmen.

4. Seitenairbagsystem nach Anspruch 1, wobei der Precrashsensor (10) eingerichtet ist, die Größe eines sich nähernden Objekts zu bestimmen.

5. Seitenairbagsystem nach Anspruch 1, wobei die Sitzbelegungssensoranordnung (5, 7) einen Sensor (5) enthält, der in der Rückenlehne des Sitzes angebracht ist und auf das Gewicht einer Person auf dem Sitz reagiert.

6. Seitenairbagsystem nach Anspruch 5, wobei der Sensor (5) im Sitz eingerichtet ist, die Position der Person auf dem Sitz zu bestimmen.

7. Seitenairbagsystem nach Anspruch 1, wobei die Sitzbelegungssensoranordnung (5, 7) einen optischen Ultraschall- oder Radarsensor (7) enthält, um Parameter zu bestimmen, die die Person auf dem Sitz betreffen.

8. Seitenairbagsystem nach Anspruch 7, wobei die bestimmten Parameter das Gewicht und/oder die Position der Person auf dem Sitz umfassen.

9. Seitenairbagsystem nach Anspruch 1, wobei die Sitzbelegungserkennungsanordnung (8) eine Identitätslesevorrichtung enthält, um einen Schlüssel, eine Karte oder einen Chip, der bzw. die eine Person auf dem Sitz kennzeichnet, zu lesen.

10. Seitenairbagsystem nach Anspruch 1, wobei ein mehrstufiger Gasgenerator (30, 61) vorgesehen ist, der eine Vielzahl einzelner pyrotechnischer Ladungen (33, 37) unterschiedlicher Größe aufweist, wobei jede pyrotechnische Ladung (33, 37) einzeln ausgelöst werden kann.

11. Seitenairbagsystem nach Anspruch 10, wobei zwei pyrotechnische Ladungen (33, 37) unterschiedlicher Größe vorhanden sind.

## Revendications

1. Système d'airbag latéral comprenant un airbag latéral (4, 60, 70) destiné à être gonflé dans le cas où un impact latéral devrait se produire dans un véhicule motorisé afin de fournir une protection pour un occupant du véhicule motorisé, l'airbag latéral (4, 60, 70) présentant une caractéristique de déploiement contrôlable et une unité centrale de traitement (6) pour contrôler l'airbag latéral (4, 60, 70) par actionnement d'au moins un amorceur (32', 36), l'unité centrale de traitement (6) étant associée à un ensemble de capteurs de choc latéral (9, 10) pour fournir un ou plusieurs signaux à l'unité centrale de traitement (6) indiquant des paramètres d'un choc latéral ou d'un choc latéral anticipé, l'unité centrale de traitement (6) étant également associée à un ensemble de capteurs (5, 7) ou ensemble d'identification (8) d'occupant de siège pour fournir un ou plusieurs signaux indiquant des paramètres en rapport à un occupant d'un siège, **caractérisé en ce que** l'ensemble de capteurs de choc latéral (9, 10) inclut un capteur de choc (9) et également un capteur de pré-choc (10) et **en ce qu'**un évent (65, 75) est fourni dans l'airbag latéral (4, 60, 70), l'évent (65, 75) étant constitué par une partie de l'airbag latéral (64, 71) qui peut être rompue en réaction à l'actionnement d'un autre amorceur (63, 77) situé de manière adjacente à l'évent (65, 75).

2. Système d'airbag latéral selon la revendication 1, dans lequel l'évent (65, 75) est formé par une pièce rapportée (64, 71) pouvant être rompue fournie dans l'airbag latéral (60, 70), ledit autre amorceur (63, 77) étant monté en position de manière adjacente à la pièce rapportée (64, 71) pouvant être rompue pour rompre la pièce rapportée (64, 71) lors du déploiement de l'amorceur (63, 77).

3. Système d'airbag latéral selon la revendication 1, dans lequel le capteur de pré-choc (10) est configuré pour déterminer la distance entre le capteur et un objet approchant, et leur vitesse relative.

4. Système d'airbag latéral selon la revendication 1, dans lequel le capteur de pré-choc (10) est configuré pour déterminer la taille d'un objet approchant.

5. Système d'airbag latéral selon la revendication 1, dans lequel ledit ensemble de capteurs (5, 7) d'occupant de siège inclut un capteur (5), monté dans le coussin du siège, sensible au poids d'un occupant du siège.

6. Système d'airbag latéral selon la revendication 5, dans lequel le capteur (5) dans le siège est configuré pour déterminer la position de l'occupant du siège.

7. Système d'airbag latéral selon la revendication 1, dans lequel l'ensemble de capteurs (5, 7) d'occupant de siège inclut un capteur optique à ultrasons ou radar (7) pour déterminer des paramètres en rapport à l'occupant du siège.

8. Système d'airbag latéral selon la revendication 7, dans lequel les paramètres déterminés comprennent le poids et/ou la position de l'occupant du siège.

9. Système d'airbag latéral selon la revendication 1, dans lequel l'ensemble d'identification (8) d'occupant de siège inclut un lecteur d'identité pour lire une clé, une carte ou une puce identifiant un occupant du siège.

10. Système d'airbag latéral selon la revendication 1, dans lequel un générateur de gaz à niveaux multiples (30, 61) est fourni, qui présente une pluralité de charges pyrotechniques discrètes (33, 37) de tailles différentes, chaque charge pyrotechnique (33, 37) pouvant être actionnée individuellement.

11. Système d'airbag latéral selon la revendication 10, dans lequel il y a deux charges pyrotechniques (33, 37) de tailles différentes.
